Europäisches Patentamt

European Patent Office

Office européen des brevets

(19)

(11) **EP 1 454 269 B1**

(12) **FASCICULE DE BREVET EUROPEEN**

(45) Date de publication et mention
de la délivrance du brevet:
**12.10.2005 Bulletin 2005/41**

(21) Numéro de dépôt: **02796912.0**

(22) Date de dépôt: **13.12.2002**

(51) Int Cl.⁷: **G06F 17/30**

(86) Numéro de dépôt international:
**PCT/FR2002/004351**

(87) Numéro de publication internationale:
**WO 2003/054735 (03.07.2003 Gazette 2003/27)**

(54) **PROCEDE ET DISPOSITIF DE REPARTITION D OBJETS DANS UN GROUPE HETEROGENE DE DISPOSITIFS DE STOCKAGE DE DONNEES**

VERFAHREN UND VORRICHTUNG ZUR VERTEILUNG VON OBJEKTEN IN EINER
HETEROGENEN GRUPPE VON DATENSPEICHERGERÄTEN

METHOD AND DEVICE FOR DISTRIBUTING OBJECTS IN A HETEROGENEOUS GROUP OF
DATA STORAGE DEVICES

(84) Etats contractants désignés:
**AT BE BG CH CY CZ DE DK EE ES FI FR GB GR
IE IT LI LU MC NL PT SE SI SK TR**

(30) Priorité: **14.12.2001 FR 0116204**

(43) Date de publication de la demande:
**08.09.2004 Bulletin 2004/37**

(73) Titulaire: **Seanodes
31770 Colomiers (FR)**

(72) Inventeurs:
• **M'ZOUGHI, Abdelaziz
F-31280 Mons (FR)**
• **GUITTENIT, Christophe
F-31400 Toulouse (FR)**

(74) Mandataire:
**Cabinet BARRE LAFORGUE & associés
95, rue des Amidonniers
31000 Toulouse (FR)**

(56) Documents cités:
**US-A- 5 333 315        US-B1- 6 330 621**

• **WANG Y ET AL: "Weighted striping in
multimedia servers" MULTIMEDIA COMPUTING
AND SYSTEMS '97. PROCEEDINGS., IEEE
INTERNATIONAL CONFERENCE ON OTTAWA,
ONT., CANADA 3-6 JUNE 1997, LOS ALAMITOS,
CA, USA,IEEE COMPUT. SOC, US, 3 juin 1997
(1997-06-03), pages 102-109, XP010239178
ISBN: 0-8186-7819-4**

## Description

L'invention concerne un procédé et un dispositif de répartition d'objets dans un groupe hétérogène de dispositifs de stockage de données.

La tendance actuelle dans le domaine des dispositifs de stockage de données consiste à stocker l'information sur des systèmes de stockage de plus en plus complexes, dits systèmes de stockage hétérogènes, car constitués de dispositifs de stockage qui n'ont ni la même capacité de stockage (quantité d'informations pouvant être stockée sur un dispositif de stockage), ni la même bande passante (débit avec lequel on peut lire ou écrire l'information sur un dispositif de stockage).

US 6,330,621 décrit un dispositif permettant de combiner des dispositifs réels non-homogènes d'un sous-système de stockage de données pour créer un dispositif logique avec des caractéristiques de qualité de service souhaitées, Ce document ne propose toutefois aucune méthode de répartition de données dans ces dispositifs.

L'étape première en vue du stockage des informations dans les différents dispositifs de stockage consiste, à l'heure actuelle, classiquement à découper chaque objet en une pluralité de blocs, et à répartir lesdits blocs dans les différents dispositifs de stockage selon une loi de répartition consistant à distribuer dans chacun des dispositifs de stockage des morceaux d'objets constitués chacun d'un ou d'une pluralité de blocs.

A des fins de clarté, on adopte dans tout le texte (description et revendications) la terminologie suivante :

- dispositif de stockage ; dispositif permettant d'enregistrer ou de restituer des données,
- client : dispositif qui accède aux données stockées dans les dispositifs de stockage,
- popularité d'un ensemble de données : valeur proportionnelle à la quantité de données transférées par unité de temps entre les dispositifs de stockage et les clients lors des accès à cet ensemble de données,
- variabilité de la popularité : valeur qui caractérise les variations de la popularité d'un ensemble de données au cours du temps,
- bloc : ensemble de données stockées de façon contiguë dans un dispositif de stockage,
- objet : ensemble de blocs ayant des variabilités de popularité comparables,
- morceau d'objet : ensemble de blocs appartenant à un même objet et placés sur le même dispositif de stockage,
- charge d'un dispositif de stockage : ensemble des données transférées entre ce dispositif de stockage et les clients par unité de temps.
- poids d'un morceau : valeur représentative de la charge de travail occasionnée par ce morceau sur le dispositif de stockage qui stocke ce morceau.

Cette valeur peut être mesurée de plusieurs façons, par exemple : taille du morceau divisée par la bande passante moyenne du dispositif de stockage, temps moyen passé par le dispositif de stockage pour traiter les requêtes de lecture ou d'écriture sur les données de ce morceau, etc...

A l'heure actuelle, deux grands principes de méthode de répartition sont à la base de tous les développements effectués.

La première méthode, que l'on peut qualifier de méthode de placement équitablement réparti, a pour principe de base de répartir dans chaque dispositif de stockage des morceaux d'objets de taille proportionnelle à la bande passante dudit dispositif de stockage. Cette méthode conduit donc à exploiter pleinement la bande passante des dispositifs de stockage.

Par contre, l'inconvénient de cette méthode résulte du fait que certains dispositifs de stockage se remplissent plus vite que d'autres, et qu'ainsi, dès qu'un dispositif de stockage est rempli, il n'est plus possible d'ajouter des morceaux dans les autres dispositifs de stockage sans déséquilibrer le placement. De ce fait, dans la majorité des cas, cette méthode ne permet pas d'exploiter pleinement la capacité de stockage d'un groupe hétérogène. Bien que cette perte de capacité de stockage soit difficilement évaluable, car fonction des configurations, il a été démontré qu'elle est en général supérieure à 25% et peut atteindre près de 80% de la capacité de stockage.

La seconde méthode, que l'on peut qualifier de placement non équitablement réparti, a quant à elle pour principe de base de répartir les blocs d'objets de façon à exploiter pleinement la capacité de stockage du groupe de dispositifs de stockage, tout en essayant d'équilibrer la charge de travail pesant sur ces dispositifs de stockage. Par contre, l'inconvénient majeur de cette méthode réside dans le fait que cet équilibre de la charge de travail est instable du fait des variations de popularité des objets qui conduisent à perturber ce dernier.

US 5,333,315 décrit un programme de "surveillance de disques et d'équilibrage" déplaçant, lorsque l'écart type de la charge des disques dépasse une valeur seuil prédéterminée, des fichiers depuis le disque le plus lourdement chargé vers un disque comparable (notamment en terme de vitesse d'accès) qui est le moins lourdement chargé. Aussi, quand un paramètre de capacité de disques excède une valeur seuil prédéterminée, ce programme déplace des fichiers depuis un disque auquel il reste significativement moins de capacité que la moyenne vers un disque comparable avec la plus importante capacité disponible.

La plupart des travaux concernant cette méthode ont donc consisté à proposer des solutions visant à permettre de rééquilibrer la charge de travail. Toutefois, ce rééquilibrage consomme de la bande passante, et, dans la pratique, conduit à une réduction du nombre d'accès que les dispositifs de stockage peuvent traiter simultanément.

En conclusion, cette seconde méthode s'avère permettre d'exploiter pleinement la capacité de stockage, mais, en contrepartie, conduit à une baisse notable de l'exploitation de la bande passante (de l'ordre de 50% variable selon les procédés de rééquilibrage développés).

Jusqu'à ce jour, tous les travaux effectués sur des procédés de placement d'objets dans des groupes hétérogènes de dispositifs de stockage ont visé à apporter des perfectionnements à l'une ou l'autre des méthodes de placement précitées, placement équitablement réparti et placement non équitablement réparti.

Toutefois, compte tenu des inconvénients spécifiqucs liés à la conception de chacune de ces méthodes de placement, tous ces travaux ont abouti à des résultats selon lesquels soit la capacité de stockage n'est pas pleinement exploitée, soit la bande passante est faiblement exploitée.

La présente invention vise à pallier cet inconvénient et a pour principal objectif de fournir une méthode de répartition d'objets sur des dispositifs de stockage hétérogènes qui conduise à optimiser à la fois l'exploitation de la capacité de stockage et l'exploitation de la bande passante desdits dispositifs de stockage.

A cet effet, l'invention vise un procédé de répartition d'objets dans un groupe hétérogène de dispositifs de stockage, selon lequel on utilise comme paramètre de gestion de la répartition des morceaux d'objets, un coefficient, dit coefficient de flexibilité CF(i), représentatif de l'écart entre le poids des morceaux de l'objet (i), lors de l'introduction de tout nouvel objet, on répartit les blocs d'objets dans lesdits dispositifs de stockage en se fixant une valeur donnée du coefficient de flexibilité, et pour les objets placés dans le groupe de dispositifs de stockage :

- on mesure et on calcule périodiquement des valeurs représentatives de la variabilité de la popularité de chaque objet,
- on calcule, pour chaque objet, à partir des valeurs précitées mesurées ou calculées à l'instant t, un coefficient de flexibilité voulu CFv (i) à affecter audit objet, selon un principe consistant à affecter à chaque objet un coefficient de flexibilité inversement proportionnel à sa variabilité de popularité,
- on mesure et on calcule à l'instant t, pour chaque objet (i), le coefficient de flexibilité réel CFr(i) dudit objet, représentatif de l'écart entre le poids des morceaux de cet objet,
- et on commande un déplacement entre les dispositifs de stockage de blocs de morceaux d'objets de façon à obtenir, pour chaque objet (i), un coefficient de flexibilité réel CFr(i) correspondant au coefficient de flexibilité voulu CFv(i) pour cet objet

Le principe à la base de l'invention est donc de moduler continuellement, de façon périodique, le poids des morceaux d'objets initialement répartis dans les différents dispositifs de stockage, en utilisant comme paramètre de gestion de ces déplacements un coefficient dit de flexibilité que l'on veut inversement proportionnel à la variabilité de la popularité.

Selon ce principe, le coefficient de flexibilité varie généralement entre deux valeurs extrêmes CF min et CF max déterminant des modes de placement différents :

- lorsque CF(i) = CF min, le poids de tous les morceaux de l'objet (i) sont égaux et le placement adopté est un placement équitablement réparti,
- lorsque CF(i) = CF max, l'objet (i) n'est composé que d'un morceau placé dans un dispositif de stockage, et le placement est donc un pur placement non équitablement réparti,
- entre ces deux extrêmes, les différentes valeurs de CF(i) permettent de moduler le poids des morceaux de façon à obtenir soit un meilleur équilibre de la charge en faisant en sorte que CF(i) se rapproche de CF min, soit une meilleure exploitation de la capacité de stockage en faisant en sorte que CF(i) se rapproche de CF max.

L'invention consiste donc en un procédé de placement hybride conduisant principalement à placer les objets ayant une popularité stable préférentiellement selon la méthode de placement non équitablement réparti (CF(i) proche de CFmax), et les objets ayant une popularité instable préférentiellement selon la méthode de placement équitablement réparti (CF(i) proche de CFmin).

Dans la pratique, des simulations effectuées sur des groupes de dispositifs de stockage ont permis de mettre en lumière que le procédé selon l'invention permettait d'obtenir un taux d'utilisation supérieur à 80% en capacité de stockage et à 85% en bande passante.

Selon un mode de mise en oeuvre avantageux, le coefficient de flexibilité réel CFr(i) calculé pour chaque objet (i) est tel que :

$$CFr(i) = Pécart(i)/Pmoy(i)$$

où : Pmoy(i) est la moyenne des poids des morceaux de l'objet (i),
Pécart(i) est l'écart type par rapport à la moyenne des poids des morceaux de l'objet (i).

Selon un autre mode de mise en oeuvre avantageux :

- dans une phase préalable, on attribue aux différents blocs des valeurs de variabilité de popularité prédéterminées, on classe lesdits blocs par ordre de variabilité de popularité décroissante, et on crée les objets par association de blocs classés de façon contiguë,

- et lors de la gestion du groupe de dispositifs de stockage, on reclasse périodiquement les blocs par ordre de variabilité de popularité décroissante en fonction de l'information mesurée sur la popularité et la variabilité desdits blocs.

Le procédé selon l'invention consistant notamment à calculer le coefficient de flexibilité idéal pour chaque objet (i) (coefficient à flexibilité voulu), et consistant donc à travailler sur des objets, ce mode de mise en oeuvre avantageux, qui conduit à créer des objets constitués de blocs présentant des variabilités de popularité très proches, permet d'obtenir un travail efficace sur chacun desdits objets.

Par ailleurs, de façon avantageuse, on détermine, pour chaque objet (i), son coefficient de flexibilité voulu CFv(i) au moyen d'un procédé de décision dit "trapèze de décision" consistant en un trapèze comportant une première base constituée d'un axe gradué ayant pour vecteur la variabilité de popularité dudit objet, et une seconde base constituée d'un axe gradué ayant pour vecteur le coefficient de flexibilité voulu pour cet objet, ledit vecteur étant de sens opposé au précédent, ledit procédé de décision comprenant les étapes consistant à :

- fixer les valeurs plafonds et planchers de chacune des variables, variabilité de popularité et coefficient de flexibilité voulu, de façon à déterminer un trapèze dont deux côtés sont constitués respectivement de segments [var plafond-CF plancher] et [var plancher-CF plafond],
- si la variabilité est supérieure ou égale à var plafond, à projeter cette variabilité sur la valeur CF plancher du coefficient de flexibilité,
- de façon similaire, si la variabilité est inférieure ou égale à var plancher, à projeter cette variabilité sur la valeur CF plafond,
- si la variabilité appartient à l'intervalle [var plancher-var plafond], à projeter linéairement cette variabilité sur l'intervalle [CF plancher-CF plafond].

Un tel trapèze de décision constitue un outil de décision qui permet de définir instantanément le coefficient de flexibilité voulu pour un objet à partir de la variabilité de popularité de ce dernier.

De plus, ce trapèze de décision offre une souplesse de comportement du fait que le comportement global peut être modifié en fonction des choix des valeurs plafonds et planchers de variabilités de popularité et coefficients de flexibilité voulus.

Selon un autre mode de mise en oeuvre avantageux, et en vue d'obtenir pour chaque objet (i) un coefficient de flexibilité réel CFr(i) correspondant au coefficient de flexibilité voulu CFv(i) :

- on calcule, pour chaque objet (i) un paramètre, dit distance CF, égal à la valeur absolue |CFv(i) - CFr (i) |,

- on déplace pour les objets (i) dont CFv(i) < CFr(i) et en premier lieu, pour les objets dont la distance CF est maximale, un bloc de ces objets appartenant au morceau de plus fort poids vers le dispositif de stockage renfermant le morceau de plus faible poids,
- et on déplace, pour les objets (i) dont CFv(i) > CFr(i), et en premier lieu, pour les objets dont la distance CF est maximale, un bloc de ces objets du dispositif de stockage le plus rempli vers le dispositif de stockage le moins rempli.

Ce mode de mise en oeuvre destiné à conférer à chaque objet un coefficient de flexibilité réel égal au coefficient de flexibilité voulu, conduit à gagner de la bande passante sur les objets dont le coefficient de flexibilité réel diminue, et à gagner de la capacité de stockage sur les objets dont le coefficient de flexibilité réel augmente.

En outre, ce mode de mise en oeuvre qui se scinde en deux processus de remaniage distincts, selon que CFv(i) est supérieur ou inférieur à CFr(i), permet d'aboutir au résultat recherché CFr(i) ≅ CFv(i) en utilisant un faible pourcentage de la bande passante du dispositif de stockage.

De plus, les deux processus de remaniage précités ont des espaces de travail disjoints et ne peuvent donc pas interférer l'un sur l'autre.

Selon un autre mode de mise en oeuvre avantageux visant à pallier aux éventuels déséquilibres dans la charge de travail résultant des imperfections de la gestion de la répartition des blocs d'objets :

- on sélectionne le dispositif de stockage le plus chargé, dit DS chaud, et le dispositif de stockage le moins chargé, dit DS froid,
- on recherche un bloc peu fréquemment accédé, dit bloc froid, situé sur le dispositif de stockage le moins chargé, et un bloc fréquemment accédé, dit bloc chaud, situé sur le dispositif de stockage le plus chargé, en vue d'échanger ces deux blocs de façon à rééquilibrer la charge,
- on trie les blocs chauds du DS chaud de la façon suivante :

  • on classe les objets par ordre de popularité moyenne décroissante,
  • on sélectionne après ce classement n objets les plus populaires, formant une zone, dite zone de haute popularité,
  • on décompose les n objets en blocs que l'on traite individuellement de façon à les trier et les répartir dans quatre classes :

    - classe 1 : blocs dont le déplacement du DS chaud vers le DS froid diminue le coefficient de flexibilité réel des objets auxquels ils appartiennent,

- classe 2 : blocs déplacés vers un dispositif de stockage autre que le dispositif de stockage le plus rempli,
- classe 3 : blocs déplacés vers le dispositif de stockage le plus rempli,
- classe 4 : blocs dont le déplacement augmente la distance CF,

- de la même manière, pour trier les blocs froids du DS froid on sélectionne après classement les n objets les moins populaires, formant une zone, dite zone de basse popularité, et on décompose ces objets en blocs que l'on traite individuellement de façon à les trier et les répartir selon les quatre classes précitées,
- puis, à partir de ces deux groupes de blocs triés, groupes de blocs chauds et de blocs froids :

  • on recherche le bloc du DS chaud à transférer, consistant en un bloc précédemment trié, situé sur ledit DS chaud et dont le numéro de classe est le plus petit,
  • on recherche le bloc du DS froid à transférer consistant en un bloc précédemment trié, situé sur ledit DS froid et dont le numéro de classe est le plus petit,
  • et on échange le bloc sélectionné du DS chaud avec le bloc sélectionné du DS froid.

Ce "rééquilibrage" est donc conçu pour réaliser des opérations consistant à échanger des blocs peu fréquemment accédés situés sur les dispositifs de stockage peu chargés avec des blocs fréquemment accédés situés sur les dispositifs de stockage fortement chargés.

Un tel processus de rééquilibrage permet ainsi de remanier aux déséquilibres dans la charge de travail en évitant, ou tout le moins en minimisant, tout problème d'interférence avec les processus de remaniage.

L'invention s'étend à un dispositif de mise en oeuvre d'un procédé selon l'invention. L'invention concerne donc un dispositif de répartition d'objets découpés en une pluralité de blocs dans un groupe hétérogène de dispositifs de stockage selon-une loi de répartition consistant à distribuer dans lesdits dispositifs de stockage des morceaux d'objets constitués d'un ou d'une pluralité de blocs, ledit dispositif de répartition comprenant :

- un module, dit d'analyse, apte à mesurer et calculer périodiquement des valeurs représentatives de la variabilité de la popularité de chaque objet,
- un module, dit de décision, apte, à partir des paramètres mesurés et calculés par le module d'analyse, à un instant t, à calculer, pour chaque objet (i), un coefficient CFr(i), dit coefficient de flexibilité réel, représentatif de l'écart entre les poids des morceaux de cet objet (i), et un coefficient, CFv(i), dit coefficient de flexibilité voulue, à affecter à l'objet (i), et calculé selon un principe consistant à affecter à chaque objet un coefficient de flexibilité inversement proportionnel à sa variabilité de popularité,

- et un module, dit de remaniage, apte à commander un déplacement entre les dispositifs de stockage de blocs de morceaux d'objets de façon à obtenir pour chaque objet (i) un coefficient de flexibilité réel CFr(i) correspondant au coefficient de flexibilité voulu CFv(i) pour cet objet.

De plus, de façon avantageuse, ce dispositif de répartition comprend un module, dit de rééquilibrage, apte à réaliser des opérations consistant à échanger des blocs peu fréquemment accédés situés sur des dispositifs de stockage peu chargés avec des blocs fréquemment accédés situés sur des dispositifs de stockage fortement chargés.

D'autres caractéristiques, buts et avantages de l'invention ressortiront de la description détaillée qui suit en référence aux dessins annexés qui en représentent à titre d'exemple non limitatif un mode de réalisation préférentiel. Sur ces dessins :

- la figure 1 est un schéma synoptique d'un dispositif selon l'invention,
- la figure 2 est un diagramme représentatif d'un mode de détermination du coefficient de flexibilité voulu CFv(i) pour chaque objet (i),
- et la figure 3 est une courbe représentative de la capacité de stockage exploitée et de la bande passante exploitée pour un groupe hétérogène de dispositifs de stockage gérés selon un procédé conforme à l'invention.

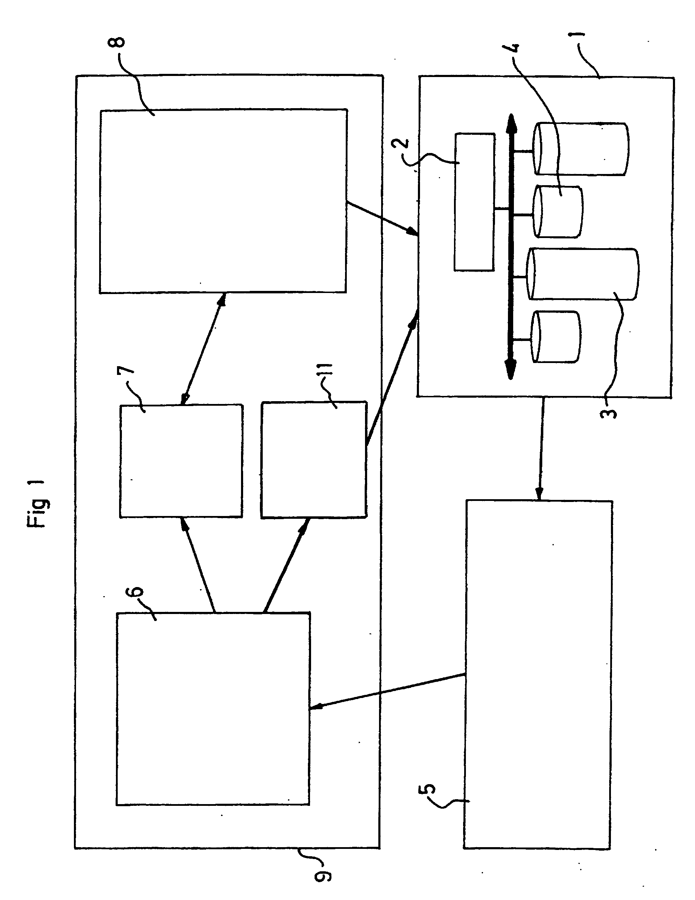

Le dispositif selon l'invention représenté à la figure 1 est destiné à assurer la gestion du placement d'objets dans un système de stockage hétérogène 1 comprenant classiquement un contrôleur 2 de gestion dudit système relié par une interconnexion à une pluralité de dispositifs de stockage 3, 4.

Ce dispositif comprend, en premier lieu, un analyseur 5 adapté pour calculer, à partir de mesures faites sur le système hétérogène 1 : la qualité de l'équilibre de la charge, la variabilité des popularités des objets, l'occupation de la capacité de stockage du système, le respect de la qualité de service. Il envoie ces estimations à la partie décideur 6 d'un gestionnaire 9 de la flexibilité des objets.

Le décideur 6 observe les variations dans les estimations fournies par l'analyseur 5 de façon à corriger une situation de surcharge ou de mauvaise occupation de la capacité de stockage. Il est conçu pour décider, par exemple, de diminuer la flexibilité de tous les objets stockés par le système de stockage 1 s'il est constaté que l'équilibre de la charge se dégrade en entraînant une mauvaise qualité de service. Ces décisions sont envoyées à un état de la flexibilité des objets 7.

Cet état de flexibilité 7 mémorise, pour chaque objet (i) stocké par le système de stockage 1, son coefficient de flexibilité voulu CFv(i), ainsi que le coefficient de flexibilité réel CFr(i). L'état de flexibilité 7 est mis à jour en fonction des décisions du décideur 6 (qui provoquent la modification du coefficient de flexibilité voulu), et en fonction des actions du remanieur 8 décrit ci-après (qui provoquent la modification du coefficient de flexibilité réel).

Le dispositif comporte, en outre, tel que précité, un remanieur 8 adapté pour commander des déplacements des données (en faisant des requêtes d'entrée/sortie) de façon que le coefficient de flexibilité réel des objets se rapproche de celui voulu par le décideur 6.

Il est à noter toutefois que les décisions du gestionnaire de flexibilité 9 ne peuvent être parfaites :

- - parce que l'analyseur 5 ne peut pas faire de mesures parfaitement précises et instantanées,
- parce que les popularités évoluent sans cesse : le travail qu'effectue le gestionnaire de flexibilité 9 à un instant t cherche à résoudre les problèmes d'une situation mesurée à l'instant t-1. Ce travail sera vraiment effectif sur les performances du système 1 à l'instant t+1. Si entre les instants t-1 et t+1, les popularités ont changé, le placement flexible n'a pas un effet optimal, et donc, une partie de la charge se trouve déséquilibrée,
- parce qu'il n'existe pas d'objets dont la popularité reste constante. Donc; dès qu'un placement n'est pas équitablement réparti pour tous les objets, un déséquilibre survient.

C'est pourquoi le placement flexible a besoin de l'appui d'un rééquilibreur dynamique 11. Mais, contrairement à ce qui se passe dans le cas du placement non équitablement réparti, le rééquilibreur aura très peu de travail à effectuer : seulement le rattrapage du déséquilibre provoqué par les imperfections du gestionnaire de flexibilité 9.

La qualité du placement flexible est donc soumise aux performances de quatre mécanismes : le décideur 6, le remanieur 8, le rééquilibreur 11 et l'analyseur 5.

Pour obtenir cette qualité de placement, ces mécanismes doivent être conçus pour :

- donner le bon coefficient de flexibilité à chaque objet. En effet, si on prend des coefficients de flexibilité opposés à ceux qu'il faudrait, on peut obtenir des résultats bien pires que ceux d'un placement non équitablement réparti,
- limiter au maximum le temps de réaction du gestionnaire de la flexibilité : l'analyseur 5 détecte des changements dans la façon de réagir du système 1 (durée d1), puis le décideur 6 donne les coefficients de flexibilité voulus (durée d2), puis le remanieur 8 déplace les données pour créer l'adéquation entre les coefficients de flexibilité voulus et les coefficients de flexibilité réels (durée d3). d2 est très courte, d1 est moyennement courte (certaines analyses nécessitent qu'on -observe le système 1 pendant un certain temps si l'on veut qu'elles soient pertinentes), d3 peut être longue s'il faut effectuer beaucoup de déplacements de remaniage. Plus d1+d2+d3 est grand et plus la charge sera déséquilibrée.

En vue de remplir ces objectifs, la fonction de chacun des mécanismes du placement hybride est décrite en détail ci-après.

En premier lieu, le décideur 6 traite les paramètres mesurés et/ou calculés par l'analyseur 5 avec pour critères, les critères suivants :

- exploitation de la capacité de stockage : il convient que la capacité de stockage libre soit bien répartie, c'est-à-dire que sa disposition maximise la quantité de données que l'on peut ajouter au système 1 (connaissant le coefficient de flexibilité initial de chaque objet nouvellement stocké),
- variabilité de la popularité : plus un objet est variable et plus il risque de déséquilibrer la charge,
- respect des contraintes de la qualité de service : si les contraintes de la qualité de service associées à un objet ne sont pas respectées (par exemple, une vidéo n'est pas servie avec un débit suffisant, ce qui entraîne des saccades), il faut stabiliser la qualité de service en diminuant le coefficient de flexibilité de cet objet, de sorte qu'il soit équitablement réparti et bénéficie ainsi de plus de bande passante. Si la qualité de service d'un ensemble d'objets est chaotique, on peut la stabiliser en diminuant globalement le coefficient de flexibilité, pour tous les objets,
- qualité de l'équilibre de la charge : si l'équilibre global est mauvais, il faut diminuer le coefficient de flexibilité global des données.

A cet effet, le décideur 6 est conçu pour calculer le coefficient de flexibilité idéal pour chaque objet (i) qui sera le coefficient de flexibilité voulu CFv(i).

En premier lieu, le décideur 6 travaillant sur des objets, et afin d'optimiser le mécanisme de décision, il convient que chaque objet soit constitué de blocs présentant des variabilités de popularité du même ordre de grandeur.

A cet effet, et dans une phase préalable, on attribue aux blocs des valeurs de variabilité de popularité fixées de façon aléatoire ou en fonction de mesures provenant d'enseignements antérieurs, et lesdits blocs sont classés par ordre de variabilité de popularité décroissante.

Les objets sont alors créés par association de blocs classés de façon contiguë. A titre d'exemple, le premier objet peut être constitué des n premiers blocs classés, le deuxième objet des n blocs suivants, etc.

Une fois cette création d'objets effectuée, le système est alors lancé, et en fonction des informations sur la popularité et la variabilité des blocs, acquises par l'analyseur 5, les blocs sont périodiquement reclassés, par ordre de variabilité de popularité décroissante.

De la sorte, le décideur 6 travaille sur des objets, dont le contenu varie constamment, surtout dans une phase initiale de stabilisation, lesdits objets étant constitués de blocs pouvant renfermer des données disparates appartenant à des fichiers divers, mais présentant des variabilités de popularité très proches permettant un travail efficace du décideur 6 sur chacun des objets.

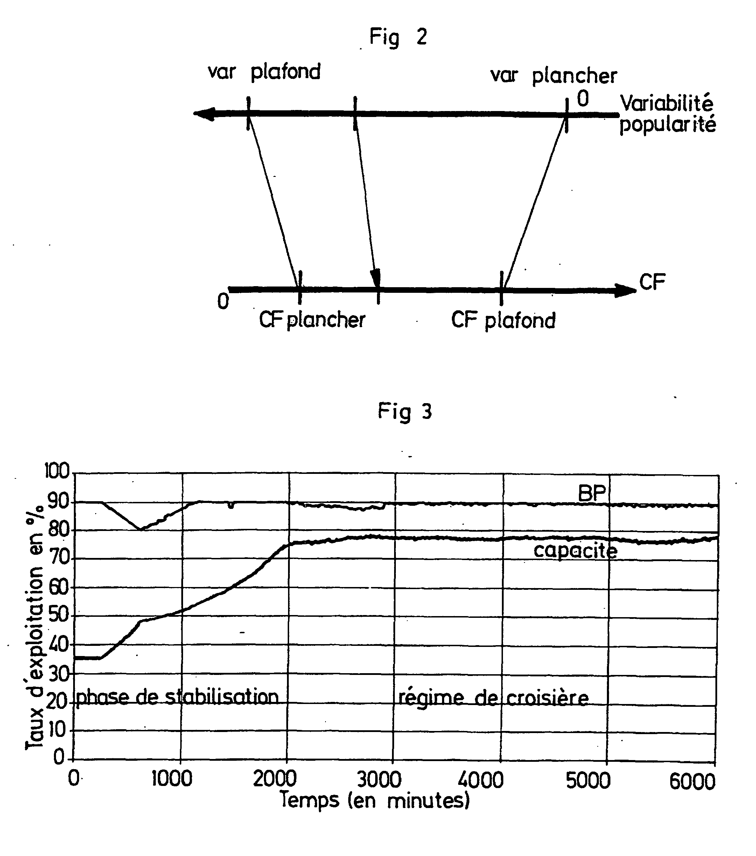

Le procédé de décision permettant de déterminer, pour chaque objet, le coefficient de flexibilité voulu en fonction de la variabilité de popularité observée par l'analyseur 5, est quant à lui basé sur l'utilisation d'un "trapèze de décision" représenté à la figure 2.

Une des bases de ce trapèze consiste en un axe gradué ayant pour vecteur la variabilité de popularité, tandis que la seconde base consiste en un axe gradué ayant pour vecteur le coefficient de flexibilité voulu, ledit vecteur étant de sens opposé par rapport au précédent.

La première étape de ce procédé de décision consiste à fixer des valeurs plafonds et planchers de chacune des variables, variabilité de popularités et coefficient de flexibilité voulu, de façon à déterminer un trapèze représenté à la figure 2, dont deux côtés sont constitués respectivement de segments [var plafond-CF plancher] et [var plancher-CF plafond].

Une fois ce trapèze de décision défini, le procédé de décision consiste :

-   si la variabilité est supérieure ou égale à var plafond, à projeter cette variabilité sur la valeur CF plancher du coefficient de flexibilité ; autrement dit, le coefficient de flexibilité voulu d'un objet dont la variabilité est supérieure ou égale à var plafond est fixé à la valeur de CF plancher ;
-   de façon similaire, si la variabilité est inférieure ou égale à var plancher, à projeter cette variabilité sur la valeur CF plafond ;
-   si la variabilité appartient à l'intervalle [var plancher-var plafond], à projeter linéairement cette variabilité sur l'intervalle [CF plancher-CF plafond].

Un tel trapèze de décision constitue donc un outil de décision qui permet de définir instantanément le coefficient de flexibilité voulu d'un objet à partir de la variabilité de popularité de ce dernier.

De plus, le comportement du décideur 6 peut être modifié en fonction du choix des valeurs plafonds et planchers de variabilités de popularité et coefficients de flexibilité voulus.

Ainsi, à titre d'exemples :

-   une augmentation des valeurs CF plancher et CF plafond (décalage vers la droite sur la figure 2) conduit à une augmentation globale des coefficients de flexibilité voulus générés par le décideur 6, et par conséquent à une meilleure exploitation de la capacité de stockage au détriment de la bande passante ;
-   inversement, une réduction de CF plancher et de CF plafond conduit à optimiser l'exploitation de la bande passante du système de stockage au détriment de sa capacité de stockage ; un raisonnement similaire peut en outre être effectué pour les valeurs var plafond et var plancher ;
-   une diminution de CF plancher et une augmentation de CF plafond (augmentation de l'intervalle entre ces bornes), autorisent une plus grande différenciation dans le traitement des objets : les objets stables seront plus facilement "flexibilisés" (par augmentation de leur coefficient de flexibilité réel) et les objets variables plus facilement "rigidifiés" (par diminution de leur coefficient de flexibilité réel). Par conséquent, le pouvoir du gestionnaire de flexibilité 9 se trouve augmenté. Inversement, ce pouvoir du gestionnaire de flexibilité 9 peut également être diminué en rapprochant les deux bornes de l'intervalle de coefficients de flexibilité. -

Le trapèze de décision permet donc de déterminer au cas par cas le coefficient de flexibilité à affecter à chaque objet, mais également de modifier la politique globale pour l'ensemble des objets en fonction des évènements intervenant dans le fonctionnement du système de stockage 1.

Ainsi, par exemple, si un dispositif de stockage 3 ou 4 du système de stockage 1 tombe en panne, une partie de la bande passante se trouve perdue et la qualité de service ne peut plus donc être respectée. Dans ce cas, le trapèze de décision peut être modifié pour gagner de la bande passante au détriment de la capacité de stockage de façon à rétablir temporairement une qualité de service convenable le temps du changement du dispositif de stockage défectueux.

En deuxième lieu, le remanieur 8 est adapté pour faire en sorte que le coefficient de flexibilité réel CFr(i) de chaque objet (i) soit égal au coefficient de flexibilité CFv(i) voulu déterminé par le décideur 6, dans l'optique de gagner de la bande passante sur les objets dont le coefficient de flexibilité réel diminue, et de gagner de la capacité de stockage sur les objets dont le coefficient de flexibilité réel augmente.

A cet effet, et en premier lieu, le procédé de fonctionnement de ce remanieur 8 utilise un paramètre dit "distance CF" égal à la valeur absolue |CFv(i) - CFr(i)|.

Ce procédé de fonctionnement se scinde en deux processus :

-   un processus de remaniage, dit remaniage BP, destiné à gagner de la bande passante et qui est appliqué sur les objets dont le CF voulu est inférieur au CF réel, et qui ont donc besoin d'être rigidifiés ; à cet effet, ce processus consiste à déplacer, pour l'objet devant être rigidifié, un bloc appartenant au morceau de plus fort poids vers le dispositif de stockage renfermant le morceau de plus faible poids ; de plus, ce processus est conçu pour traiter, en premier lieu, les objets dont la distance CF est la plus importante,

- un processus de remaniage, dit remaniage CS, destiné à gagner de la capacité de stockage, et qui est appliqué sur les objets dont le CF voulu est supérieur au CF réel, et qui ont donc besoin d'être flexibilisés ; à cet effet, ce processus consiste à sélectionner les objets ayant une distance CF maximale et de déplacer un bloc de ces objets du dispositif de stockage le plus rempli vers le dispositif de stockage le moins rempli.

Ce choix de deux processus distincts de traitement permet d'obtenir une bonne exploitation de décision du décideur 6 en utilisant un faible pourcentage de la bande passante du système de stockage. De plus, il est à noter que le processus de remaniage BP travaille sur des objets qui doivent être rigidifiés alors que processus remaniage CS travaille sur des objets qui doivent être flexibilités. Par conséquent, ces deux processus ont des espaces de travail disjoints et ne peuvent donc pas interférer l'un sur l'autre.

En dernier lieu, le rééquilbreur 11 vise; tel que précité, à pallier aux déséquilibres résultant dans la charge de travail des imperfections du gestionnaire de flexibilité 1.

Le procédé de rééquilibrage est conçu pour réaliser, à cet effet, des opérations consistant à échanger des blocs peu fréquemment accédés (blocs froids) situés sur les dispositifs de stockage peu chargés (DS froids) avec des blocs fréquemment accédés (blocs chauds) situés sur les dispositifs de stockage fortement chargés (DS chauds).

Un tel procédé de rééquilibrage, totalement disjoint du remaniage, se doit d'être conçu pour éviter ou à tout le moins minimiser tout problème d'interférence avec les processus de remaniage, et notamment le processus de remaniage BP, et fonctionne donc d'une manière spécifique.

Ce procédé de rééquilibrage nécessite une méthode de classement spécifique évolutive en fonction des informations transmises par l'analyseur 5, et qui est explicitée ci-dessous.

En premier lieu, on sélectionne le dispositif de stockage le plus chargé (DS chaud) et le dispositif de stockage le moins chargé (DS froid).

Pour traiter le déplacement d'un bloc chaud du DS chaud vers le DS froid, les objets sont classés par ordre de popularité moyenne décroissante, et on sélectionne après ce classement, les n objets les plus populaires, avec n- prédéterminé par exemple égal à 25, constituant une "zone haute" de popularité.

Ces objets sélectionnés sont alors décomposés en blocs qui sont ensuite traités individuellement de façon à être triés et répartis dans les quatre classes suivantes :

- classe 1 : blocs dont le déplacement du DS chaud vers le DS froid diminue le coefficient de flexibilité réel des objets auxquels ils appartiennent, conduisant donc à une rigidification de ces derniers. Cette classe 1 concerne donc les blocs n'entraînant aucun risque de conflit avec le remaniage BP,
- classe 2 : blocs déplacés vers un dispositif de stockage autre que le dispositif de stockage le plus rempli (c'est-à-dire lorsque le DS froid diffère du dispositif de stockage le plus rempli) ; cette classe 2 concerne donc les blocs n'entraînant aucun risque de conflit avec le remaniage CS,
- classe 3 : blocs déplacés vers le dispositif de stockage le plus rempli (classe opposée à la classe 2) et donc susceptibles de générer un risque de conflit avec le remaniage CS,
- classe 4 : blocs dont le déplacement augmente la distance CF (classe opposée à la classe 1), et pouvant générer des risques de conflit avec le remaniage BP.

De même, pour traiter le déplacement d'un bloc froid du DS froid vers le DS chaud, un classement identique dans les mêmes quatre classes est réalisé pour les blocs des n objets les moins populaires formant une "zone basse" de popularité.

A partir de ce classement, les étapes du procédé de rééquilibrage sont les suivantes :

1) Recherche du bloc de DS chaud à transférer, appartenant à un objet classé dans la zone haute de popularité. A cet effet, on choisit le bloc de DS chaud dont le numéro de la classe est le plus petit (classe 1 prioritaire), et dont l'objet a une distance CF minimale. A noter que ce choix d'une distance CF minimale conduit, notamment, à diminuer les risques de conflit avec le remaniage CS pour les blocs situés en classe 3, et le remaniage BP pour les objets situés dans la classe 4 du fait que ces remaniages conduisent à déplacer quasi-uniquement les données des objets ayant une grande distance CF.

2) Recherche du bloc de DS froid à transférer, appartenant à un objet classé dans la zone basse de popularité (recherche similaire à celle de l'étape 1) ci-dessus.

3) Echange du bloc de DS chaud sélectionné à l'étape 1) ci-dessus avec le bloc du DS froid sélectionné à l'étape 2) ci-dessus.

La conception du gestionnaire de flexibilité 9, conduisant à un "placement flexible", alliée à ce processus de rééquilibrage, conduit à optimiser à la fois l'exploitation de la capacité de stockage et l'exploitation de la bande passante des systèmes de stockage, tel que cela ressort de l'exemple d'utilisation décrit ci-dessous en référence à la figure 3.

Le système de stockage 1 utilisé consistait en deux disques durs d'une capacité de stockage de 18,6 Go et d'une bande passante de 34,2 Mo/s, et en deux disques durs d'une capacité de stockage de 43 Go et d'une bande passante de 28,8 Mo/s.

Sur la figure 3 illustrant les résultats obtenus, le temps de fonctionnement en minutes est porté en abscisse, tandis que les taux d'exploitation de la bande passante et de la capacité de stockage sont portés en ordonnée.

A l'instant zéro de mise en service, le système de stockage 1 est rempli de façon aléatoire. Tel que cela ressort de la courbe de la figure 3, durant une phase initiale de stabilisation, le gestionnaire de flexibilité 9 conduit à libérer de la capacité de stockage tout en stabilisant au mieux possible la bande passante. Ensuite, au fur et à mesure, les informations fournies par l'analyseur 5 deviennent plus précises et plus représentatives des caractéristiques des objets, ce qui permet au décideur 6 de calculer des coefficients de flexibilité voulus de plus en plus pertinents.

Pour chaque objet, ces coefficients de flexibilité voulus s'approchent, en outre, petit à petit des valeurs des coefficients de flexibilité réels en raison de l'action du remanieur 7.

A l'issue de cette phase de stabilisation, le gestionnaire de flexibilité 9 permet d'obtenir un régime de croisière pour lequel 77% du taux d'utilisation de la capacité de stockage et 89% du taux d'utilisation de la bande passante sont atteints.

A titre comparatif, un placement "équitablement réparti" permet d'atteindre, dans les mêmes conditions, un taux d'utilisation de 100% de la bande passante, mais seulement un taux d'utilisation de 35% de la capacité.

Par conséquent, par rapport aux méthodes de placement connues, l'"entrelacement flexible" selon l'invention permet d'obtenir des taux élevés d'utilisation tant en bande passante qu'en capacité de stockage, et ne conduit pas à "sacrifier" un de ces taux d'utilisation en faveur de l'autre.

## Revendications

**1.** Procédé de répartition d'objets dans un groupe hétérogène (1) de dispositifs de stockage (3, 4) de données selon lequel on découpe chaque objet en une pluralité de blocs, on répartit lesdits blocs dans les différents dispositifs de stockage selon une loi de répartition consistant à distribuer dans chacun desdits dispositifs de stockage (3, 4) des morceaux d'objets constitués chacun d'un ou d'une pluralité de blocs, ledit procédé étant **caractérisé en ce qu'**on utilise comme paramètre de gestion de la répartition des morceaux d'objets, un coefficient, dit coefficient de flexibilité CF(i), représentatif de l'écart entre le poids des morceaux de l'objet (i), lors de l'introduction de tout nouvel objet, on répartit les blocs d'objets dans lesdits dispositifs de stockage (3, 4) en se fixant une valeur donnée du coefficient de flexibilité, et pour les objets placés dans le groupe de dispositifs de stockage (3, 4) :

- on mesure et on calcule périodiquement des valeurs représentatives de la variabilité de la popularité de chaque objet,
- on calcule, pour chaque objet, à partir des valeurs précitées mesurées ou calculées à l'instant t, un coefficient de flexibilité voulu CFv(i) à affecter audit objet, selon un principe consistant à affecter à chaque objet un coefficient de flexibilité inversement proportionnel à sa variabilité de popularité,
- on mesure et on calcule à l'instant t, pour chaque objet (i), le coefficient de flexibilité réel CFr (i) dudit objet, représentatif de l'écart entre le poids des morceaux de cet objet,
- et on commande un déplacement entre les dispositifs de stockage de blocs de morceaux d'objets de façon à obtenir, pour chaque objet (i), un coefficient de flexibilité réel CFr(i) correspondant au coefficient de flexibilité voulu CFv (i) pour cet objet.

**2.** Procédé de répartition selon la revendication 1, **caractérisé en ce que** le coefficient de flexibilité réel CFr(i) calculé pour chaque objet (i) est tel que :

$$CFr(i) = Pécart(i)/Pmoy(i)$$

où :

Pmoy(i) est la moyenne des poids des morceaux de l'objet (i),
Pécart(i) est l'écart type par rapport à la moyenne des poids des morceaux de l'objet (i).

**3.** Procédé de répartition selon l'une des revendications 1 ou 2, **caractérisé en ce que** :

- dans une phase préalable, on attribue aux différents blocs des valeurs de variabilité de popularité prédéterminées, on classe lesdits blocs par ordre de variabilité de popularité décroissante, et on crée les objets par association de blocs classés de façon contiguë,
- et lors de la gestion du groupe de dispositifs de stockage, on reclasse périodiquement les blocs par ordre de variabilité de popularité décroissante en fonction de l'information mesurée sur la popularité et la variabilité desdits blocs.

4. Procédé de répartition selon l'une des revendications 1 à 3, **caractérisé en ce que** l'on détermine, pour chaque objet (i), son coefficient de flexibilité voulu CFv(i) au moyen d'un procédé de décision dit "trapèze de décision", consistant en un trapèze comportant une première base constituée d'un axe gradué ayant pour vecteur la variabilité de popularité dudit objet, et une seconde base constituée d'un axe gradué ayant pour vecteur le coefficient de flexibilité voulu pour cet objet, ledit vecteur étant de sens opposé au précédent, ledit procédé de décision comprenant les étapes consistant à :

- fixer les valeurs plafonds et planchers de chacune des variables, variabilité de popularité et coefficient de flexibilité voulu, de façon à déterminer un trapèze dont deux côtés sont constitués respectivement de segments [var plafond-CF plancher] et [var plancher-CF plafond],
- si la variabilité est supérieure ou égale à var plafond, à projeter cette variabilité sur la valeur CF plancher du coefficient de flexibilité,
- de façon similaire, si la variabilité est inférieure ou égale à var plancher, à projeter cette variabilité sur la valeur CF plafond,
- si la variabilité appartient à l'intervalle [var plancher-var plafond], à projeter linéairement cette variabilité sur l'intervalle [CF plancher-CF plafond].

5. Procédé de répartition selon l'une des revendications 1 à 4, **caractérisé en ce que**, en vue d'obtenir pour chaque objet (i) un coefficient de flexibilité réel CFr(i) correspondant au coefficient de flexibilité voulu CFv(i) :

- on calcule, pour chaque objet (i) un paramètre, dit distance CF, égal à la valeur absolue |CFv(i) - CFr(i)|,
- on déplace pour les objets (i) dont CFv(i) < CFr(i) et en premier lieu, pour les objets dont la distance CF est maximale, un bloc de ces objets appartenant au morceau de plus fort poids vers le dispositif de stockage (3, 4) renfermant le morceau de plus faible poids,
- et on déplace, pour les objets (i) dont CFv(i) > CFr(i), et en premier lieu, pour les objets dont la distance CF est maximale, un bloc de ces objets du dispositif de stockage (3, 4) le plus rempli vers le dispositif de stockage (3, 4) le moins rempli.

6. Procédé de répartition selon l'une des revendications 1 à 5, **caractérisé en ce que** :

- on sélectionne le dispositif de stockage (3, 4) le plus chargé, dit DS chaud, et le dispositif de stockage (3, 4) le moins chargé, dit DS froid,
- on recherche un bloc peu fréquemment accédé, dit bloc froid, situé sur le dispositif de stockage (3, 4) le moins chargé, et un bloc fréquemment accédé, dit bloc chaud, situé sur le dispositif de stockage (3, 4) le plus chargé, en vue d'échanger ces deux blocs de façon à rééquilibrer la charge,
- on trie les blocs chauds de DS chaud de la façon suivante ;

  • on classe les objets par ordre de popularité moyenne décroissante,
  • on sélectionne après ce classement n objets les plus populaires, formant une zone, dite zone de haute popularité,
  • on décompose les n objets en blocs que l'on traite individuellement de façon à les trier et les répartir dans quatre classes :

    - classe 1 : blocs dont le déplacement du DS chaud vers le DS froid diminue le coefficient de flexibilité réel des objets auxquels ils appartiennent,
    - classe 2 : blocs déplacés vers un dispositif de stockage (3, 4) autre que le dispositif de stockage (3, 4) le plus rempli,
    - classe 3 : blocs déplacés vers le dispositif de stockage (3, 4) le plus rempli,
    - classe 4 : blocs dont le déplacement augmente la distance CF,

- de la même manière, pour trier les blocs froids du DS froid on sélectionne après classement les n objets les moins populaires, formant une zone, dite zone de basse popularité, et on décompose ces objets en blocs que l'on traite individuellement de façon à les trier et les répartir selon les quatre classes précitées,
- puis, à partir de ces deux groupes de blocs triés, groupes de blocs chauds et de blocs froids :

  • on recherche le bloc du DS chaud à transférer, consistant en un bloc précédemment trié, situé sur ledit DS chaud et dont le numéro de classe est le plus petit,
  • on recherche le bloc du DS froid à transférer consistant en un bloc précédemment trié, situé sur ledit DS froid et dont le numéro de classe est le plus petit,
  • et on échange le bloc sélectionné du DS chaud avec le bloc sélectionné du DS froid.

7. Dispositif de répartition d'objets (i) découpés en une pluralité de blocs dans un groupe hétérogène (1) de dispositifs de stockage (3, 4) selon une loi de répartition consistant à distribuer dans lesdits dispositifs de stockage (3, 4) des morceaux d'objets constitués d'un ou d'une pluralité de blocs, ledit dispositif étant **caractérisé en ce qu'**il comprend :

- un module, dit d'analyse (5), apte à mesurer et calculer périodiquement des valeurs représentatives de la variabilité de la popularité de chaque objet,
- un module, dit de décision (6), apte, à partir des paramètres mesurés et calculés par le module d'analyse (5), à un instant t, à calculer, pour chaque objet (i), un coefficient CFr(i), dit coefficient de flexibilité réel, représentatif de l'écart entre les poids des morceaux de cet objet (i), et un coefficient, CFv(i), dit coefficient de flexibilité voulue, à affecter à l'objet (i), et calculé selon un principe consistant à affecter à chaque objet un coefficient de flexibilité inversement proportionnel à sa variabilité de popularité,
- et un module, dit de remaniage (8), apte à commander un déplacement entre les dispositifs de stockage (3, 4) de blocs de morceaux d'objets de façon à obtenir pour chaque objet (i) un coefficient de flexibilité réel CFr(i) correspondant au coefficient de flexibilité voulu CFv(i) pour cet objet.

8. Dispositif de répartition selon la revendication 7, **caractérisé en ce qu'**il comprend un module, dit de rééquilibrage (11), apte à réaliser des opérations consistant à échanger des blocs peu fréquemment accédés situés sur des dispositifs de stockage (3, 4) peu chargés avec des blocs fréquemment accédés situés sur des dispositifs de stockage (3, 4) fortement chargés.

**Patentansprüche**

1. Verfahren zum Verteilen von Objekten in einer heterogenen Gruppe (1) von Datenspeichergeräten (3, 4), das die folgenden Schritte umfasst: Unterteilen aller Objekte in eine Mehrzahl von Blöcken, Verteilen der genannten Blöcke unter den unterschiedlichen Speichergeräten gemäß einem Verteilungsgesetz, das darin besteht, dass in jedem der genannten Speichergeräte (3, 4) Stücke von Objekten verteilt werden, die jeweils aus einem oder aus einer Mehrzahl von Blöcken bestehen, wobei das genannte Verfahren **dadurch gekennzeichnet ist, dass** es als Parameter für die Steuerung der Verteilung von Objektstücken einen Koeffizienten, Flexibilitätskoeffizient CF(i) genannt, verwendet, der die Differenz zwischen den Wertigkeiten von Objektstücken (i) repräsentiert, wenn ein neues Objekt hinzugefügt wird, die genannten Objektblöcke unter den genannten Speichergeräten (3, 4) verteilt werden, indem ein bestimmter Wert des Flexibilitätskoeffizienten vorgegeben wird, während für Objekte, die in die Gruppe von Speichergeräten (3, 4) gesetzt werden:

- die Werte, die die Popularitätsvariabilität jedes Objekts repräsentieren, periodisch gemessen und berechnet werden;
- für jedes Objekt ein gewünschter Flexibilitätskoeffizient CFv(i) anhand der oben genannten Werte berechnet wird, die zum Zeitpunkt t gemessen oder berechnet wurden, und dem genannten Objekt gemäß einem Prinzip zugeordnet wird, das darin besteht, jedem Objekt einen Flexibilitätskoeffizienten zuzuordnen, der umgekehrt proportional zu seiner Popularitätsvariabilität ist;
- für jedes Objekt (i) der reale Flexibilitätskoeffizient CFr(i) des genannten Objekts, der die Differenz zwischen den Wertigkeiten der Stücke dieses Objekts repräsentiert, zum Zeitpunkt t gemessen und berechnet wird;
- und eine Bewegung zwischen den Objektstückblöcke speichernden Geräten bewirkt wird, um für jedes Objekt (i) einen realen Flexibilitätskoeffizienten CFr(i) zu erhalten, der dem gewünschten Flexibilitätskoeffizienten CFv(i) für dieses Objekt entspricht.

2. Verteilungsverfahren nach Anspruch 1, **dadurch gekennzeichnet, dass** der reale Flexibilitätskoeffizient CFr(i), der für jedes Objekt (i) berechnet wurde, derart ist, dass:

$$CFr(i) = Pabw(i)/Pmittel(i)$$

wobei: Pmittel(i) das Mittel der Wertigkeiten von Stücken des Objekts (i) ist, und
Pabw(i) die Standardabweichung in Bezug auf das Mittel der Wertigkeiten der Stücke des Objekts (i) ist.

3. Verteilungsverfahren nach Anspruch 1 oder 2, **dadurch gekennzeichnet, dass**:

- in einer Vorabphase den verschiedenen Blöcken vorbestimmte Popularitätsvariabilitätswerte zugeordnet werden, die genannten Blöcke in absteigender Reihenfolge der Popularitätsvariabilität klassifiziert werden, und die Objekte durch Assoziation von aneinander grenzend klassifizierten Blöcken erzeugt werden;
- und im Laufe der Steuerung der Gruppe von Speicherblöcken die Blöcke periodisch in absteigender Reihenfolge der Popularitätsvariabilität in Abhängigkeit von der gemessenen Information über die Popularität und die Variabilität der genannten Blökke umklassifiziert werden.

4.  Verteilungsverfahren nach einem der Ansprüche 1 bis 3, **dadurch gekennzeichnet, dass** der gewünschte Flexibilitätskoeffizient CFv(i) für jedes Objekt (i) mittels eines Entscheidungsverfahrens mit der Bezeichnung "Entscheidungstrapez" ermittelt wird, das aus einem Trapez mit einer ersten Basis aus einer graduierten Achse, deren Vektor die Popularitätsvariabilität des genannten Objekts ist, und einer zweiten Basis besteht, die aus einer graduierten Achse besteht, deren Vektor der gewünschte Flexibilitätskoeffizient für das genannte Objekt ist, wobei der genannte Vektor die entgegengesetzte Richtung zum vorherigen hat, wobei das genannte Entscheidungsverfahren die folgenden Schritte umfasst:

    -   Vorgeben der Ober- und Untergrenzwerte für jede der Variablen, nämlich die Popularitätsvariabilität und den gewünschten Flexibilitätskoeffizienten, um ein Trapez zu erzeugen, dessen beide Seiten jeweils aus den Segmenten [var Obergrenze-CF Untergrenze] und [var Untergrenze-CF Obergrenze] besteht,
    -   Projizieren dieser Variabilität, wenn die Variabilität gleich oder größer ist als var Obergrenze, auf den Wert CF Untergrenze des Flexibilitätskoeffizienten;
    -   ebenso, Projizieren dieser Variabilität, wenn die Variabilität gleich oder kleiner als var Untergrenze ist, auf den Wert CF Obergrenze;
    -   lineares Projizieren dieser Variabilität, wenn die Variabilität innerhalb des Intervalls [var Untergrenze - var Obergrenze] liegt, auf das Intervall [CF Untergrenze - CF Obergrenze].

5.  Verteilungsverfahren nach einem der Ansprüche 1 bis 4, **dadurch gekennzeichnet, dass** zum Erhalten eines realen Flexibilitätskoeffizienten CFr(i) für jedes Objekt (i), das dem gewünschten Flexibilitätskoeffizienten CFv(i) entspricht:

    -   für jedes Objekt (i) ein Parameter mit der Bezeichnung CF-Distanz, der gleich dem Absolutwert |CFv(i)
    -   CFr(i)| zwischen den beiden Linien ist, berechnet wird;
    -   für die Objekte (i), für die CFv(i) < CFr(i) ist, und an erster Stelle für die Objekte, für die die CF-Distanz maximal ist, ein Block dieser Objekte, der zu dem Stück mit der höchsten Wertigkeit gehört, zu dem Speichergerät (3, 4) bewegt wird, das das Stück mit der niedrigsten Wertigkeit enthält;

    -   und für die Objekte (i), für die CFv(i) > CFr(i) ist, und an erster Stelle für die Objekte, für die die CF-Distanz maximal ist, ein Block dieser Objekte des vollsten Speichergerätes (3, 4) zu dem am wenigsten vollen Speichergerät (3, 4) bewegt wird.

6.  Verteilungsverfahren nach einem der Ansprüche 1 bis 5, **dadurch gekennzeichnet, dass**:

    -   das am stärksten beladene Speichergerät (3, 4), Heiß-SD genannt, und das am schwächsten beladene Speichergerät, Kalt-SD genannt, gewählt werden;
    -   ein Block, auf den selten zugegriffen wird, Kalt-Block genannt, sich in dem am schwächsten beladenen Speichergerät (3, 4) befindet, und ein Block, auf den häufig zugegriffen wird, Heiß-Block genannt, sich in dem am stärksten beladenen Speichergerät (3, 4) befindet, so dass diese beiden Blöcke ausgetauscht werden können, um die Last neu auszugleichen;
    -   die Heiß-Blöcke des Heiß-SD wie folgt sortiert werden:

        •   die Objekte werden in absteigender Reihenfolge der mittleren Popularität klassifiziert,
        •   die n populärsten Objekte, die eine Region, Hochpopularitätsregion genannt, bilden, werden nach dieser Klassifizierung gewählt,
        •   die n Objekte werden in Blöcke unterteilt, die individuell verarbeitet werden, um sie zu sortieren und auf vier Klassen zu verteilen:

            -   Klasse 1: Blöcke, für die die Bewegung vom Heiß-SD zum Kalt-SD den realen Flexibilitätskoeffizienten der Objekte verringert, zu denen sie gehören,
            -   Klasse 2: Blöcke, die zu einem anderen als dem vollsten Speichergerät (3, 4) bewegt werden,
            -   Klasse 3: Blöcke, die zum vollsten Speichergerät bewegt werden,
            -   Klasse 4: Blöcke, deren Verlegung die CF-Distanz erhöht,

    -   auf dieselbe Weise werden zum Sortieren der Kaltblöcke im Kalt-SD die n am wenigsten populären Objekte nach Klassifizierung gewählt, wobei diese Objekte eine Region, Niederpopularitätsregion genannt, bilden und in Blöcke unterteilt werden, die individuell verarbeitet werden, um sie zu sortieren und auf die oben genannten vier Klassen zu verteilen,

- wonach, beginnend mit diesen beiden Gruppen von sortierten Blöcken, nämlich die Gruppen von Heißblöcken und Kaltblöcken:

  • der zu übertragende Block im Heiß-SD gesucht wird, der aus einem zuvor sortierten Block besteht, der sich in dem genannten Heiß-SD befindet und dessen Klassennummer die niedrigste ist,

  • der zu übertragende Block im Kalt-SD gesucht wird, der aus einem zuvor sortierten Block besteht, der sich in dem genannten Kalt-SD befindet und dessen Klassennummer die niedrigste ist,

  • und der gewählte Block im Heiß-SD gegen den gewählten Block im Kalt-SD ausgetauscht wird.

7. Vorrichtung zum Verteilen von Objekten (i), die in eine Mehrzahl von Blöcken in einer heterogenen Gruppe (1) von Speichergeräten (3, 4) gemäß einem Verteilungsgesetz unterteilt werden, das darin besteht, Objektstücke auf die genannten Speichergeräte (3, 4) zu verteilen, die jeweils aus einem Block oder einer Mehrzahl von Blöcken bestehen, wobei die genannte Verteilungsvorrichtung **dadurch gekennzeichnet ist, dass** sie Folgendes umfasst:

  - ein Modul, Analysemodul (5) genannt, zum periodischen Messen und Berechnen von Werten, die Popularitätsvariabilität jedes Objekts repräsentieren;

  - ein Modul, Entscheidungsmodul (6) genannt, um für jedes Objekt (i) anhand der vom Analysemodul (5) gemessenen und berechneten Parameter zu einem Zeitpunkt t einen Koeffizienten CFr(i), realer Flexibilitätskoeffizient genannt, der die Differenz zwischen den Wertigkeiten von Stücken dieses Objekts (i) repräsentiert, und eines Koeffizienten CFv(i), gewünschter Flexibilitätskoeffizient genannt, zu berechnen, der dem Objekt (i) zugewiesen werden soll und der gemäß einem Prinzip berechnet wird, das darin besteht, jedem Objekt einen Flexibilitätskoeffizienten zuzuordnen, der umgekehrt proportional zu seiner Popularitätsvariabilität ist;

  - und ein Modul, Umkonfigurationsmodul (8) genannt, zum Bewirken einer Bewegung von Objektstückblöcken zwischen den Speichergeräten (3, 4), um für jedes Objekt (i) einen realen Flexibilitätskoeffizienten CFr(i) zu erhalten, der dem gewünschten Flexibilitätskoeffizienten CFv(i) für dieses Objekt entspricht.

8. Verteilungsvorrichtung nach Anspruch 7, **dadurch gekennzeichnet, dass** sie ein Modul, Neuausgleichsmodul (11) genannt, zum Ausführen von Vorgängen umfasst, die darin bestehen, Blöcke, auf die selten zugegriffen wird, die sich in weniger beladenen Speichergeräten (3, 4) befinden, durch Blöcke zu ersetzen, auf die häufig zugegriffen wird und die sich in stark beladenen Speichergeräten (3, 4) befinden.

**Claims**

1. A method of distributing objects in a heterogeneous group (1) of data storage devices (3, 4), which consists in breaking down each object into a plurality of blocks, distributing said blocks in the different storage devices in accordance with a distribution law which consists in distributing in each of said storage devices (3, 4) pieces of objects consisting each of one or of a plurality of blocks, the said method being **characterized in that** it uses as the parameter for managing the distribution of pieces of objects a coefficient, called the flexibility coefficient CF(i), representing the difference between the weights of the pieces of the object (i), when any new object is added, the blocks of objects being distributed in said storage devices (3, 4) by specifying a given value of the flexibility coefficient, while for objects placed in the group of storage devices (3, 4):

   - the values representing the variability in popularity of each object are measured and calculated periodically;

   - for each object, a desired flexibility coefficient CFv(i) is calculated from the aforesaid values measured or calculated at the instant t, and is to be assigned to said object according to a principle consisting in assigning to each object a flexibility coefficient inversely proportional to its variability in popularity;

   - for each object (i), the real flexibility coefficient CFr(i) of said object, representing the difference between the weights of the pieces of said object, is measured and calculated at the instant t;

   - and a movement is created between the devices storing blocks of object pieces so as to obtain, for each object (i), a real flexibility coefficient CFr(i) corresponding to the desired flexibility coefficient CFv(i) for this object.

2. The distribution method according to claim 1, **characterized in that** the real flexibility coefficient CFr (i) calculated for each object (i) is such that:

$$CFr(i) = Pdev(i)/Pmean(i)$$

where: Pmean(i) is the mean of the weights of the pieces of the object (i), and
Pdev(i) is the standard deviation with respect to the mean of the weights of the pieces of the object (i).

3. The distribution method according to either one of claims 1 and 2, **characterized in that**:

   - in a preliminary step, predetermined values of variability in popularity are assigned to the different blocks, said blocks are classified in decreasing order of variability in popularity, and the objects are created by the association of contiguously classified blocks;

   - and, in the course of the management of the group of storage devices, the blocks are reclassified periodically in decreasing order of variability in popularity as a function of the measured information on the popularity and variability of said blocks.

4. The distribution method according to any one of claims 1 to 3, **characterized in that** the desired flexibility coefficient CFv(i) is determined for each object (i) by means of a decision method called the "decision trapezium", consisting of a trapezium having a first base consisting of a graduated axis whose vector is the variability in popularity of said object, and a second base consisting of a graduated axis whose vector is the desired flexibility coefficient for said object, said vector having the opposite direction to the preceding one, said decision method comprising the steps of:

   - specifying the ceiling and floor values of each of the variables, namely the variability in popularity and the desired flexibility coefficient, so as to produce a trapezium whose two sides consist of the segments [var ceiling-CF floor] and [var floor-CF ceiling] respectively,

   - if the variability is greater than or equal to var ceiling, projecting this variability onto the value CF floor of the flexibility coefficient;

   - similarly, if the variability is less than or equal to var floor, projecting this variability onto the value CF ceiling;

   - if the variability lies in the interval [var floor-var ceiling], linearly projecting this variability onto the interval [CF floor-CF ceiling].

5. The distribution method according to any one of claims 1 to 4, **characterized in that**, in order to obtain for each object (i) a real flexibility coefficient CFr(i) corresponding to the desired flexibility coefficient CFv(i) :

   - a parameter called the CF distance, equal to the absolute value |CFv(i) - CFr(i)|, is calculated for each object (i);

   - for the objects (i) for which CFv(i) < CFr(i), and in the first place for the objects for which the CF distance is maximum, a block of these objects belonging to the piece of highest weight is moved towards the storage device (3, 4) containing the piece of lowest weight;

   - and, for the objects (i) for which CFv(i) > CFr(i), and in the first place for the objects for which the CF distance is maximum, a block of these objects is moved from the fullest storage device (3, 4) towards the least full storage device (3, 4).

6. The distribution method according to any one of claims 1 to 5, **characterized in that**:

   - the most loaded storage device (3, 4), called the hot SD, and the least loaded storage device (3, 4), called the cold SD, are selected;

   - an infrequently accessed block, called a cold block, is found in the least loaded storage device (3, 4), and a frequently accessed block, called a hot block, is found in the most loaded storage device (3, 4), so that these two blocks can be exchanged to rebalance the load;

   - the hot blocks in the hot SD are sorted as follows:

     - the objects are classified in decreasing order of mean popularity,

     - after this classification, n most popular objects, forming a region called the high-popularity region, are selected,

     - the n objects are broken down into blocks which are processed individually to sort them and distribute them in four classes:

       - class 1: blocks for which the movement from the hot SD towards the cold SD decreases the real flexibility coefficient of the objects to which they belong,

       - class 2: blocks moved towards a storage device (3, 4) other than the fullest storage device(3, 4),

- class 3: blocks moved towards the fullest storage device (3, 4),

- class 4: blocks whose movement increases the CF distance,

- in the same way, in order to sort the cold blocks in the cold SD, the n least popular objects are selected after classification, these objects forming a region called the region of low popularity, and are broken down into blocks which are processed individually to sort them and distribute them in the aforesaid four classes,

- after which, starting from these two groups of sorted blocks, namely the groups of hot blocks and cold blocks:

  - the block in the hot SD to be transferred, consisting of a previously sorted block which is located in said hot SD and whose class number is lowest, is found,

  - the block in the cold SD to be transferred, consisting of a previously sorted block which is located in said cold SD and whose class number is lowest, is found,

  - and the selected block in the hot SD is exchanged with the selected block in the cold SD.

7. A device for distributing objects (i) broken down into a plurality of blocks in a heterogeneous group (1) of storage devices (3, 4) according to a distribution law consisting in the distribution in said storage devices (3, 4) of pieces of objects each consisting of a block or a plurality of blocks, said distribution device being **characterized in that** it comprises:

- a module, called the analysis module (5), for periodically measuring and calculating values representing the variability in popularity of each object;

- a module, called the decision module (6), for calculating for each object (i), from the parameters measured and calculated by the analysis module (5), at a instant t, a coefficient CFr(i), called the real flexibility coefficient, representing the difference between the weights of the pieces of this object (i), and a coefficient CFv (i), called the desired flexibility coefficient, to be assigned to the object (i), and calculated according to a principle consisting in assigning to each object a flexibility coefficient inversely proportional to its variability in popularity;

- and a module, called the reconfiguration module (8), for producing a movement of blocks of pieces of objects between the storage devices (3, 4), so as to obtain for each object (i) a real flexibility coefficient CFr(i) corresponding to the desired flexibility coefficient CFv(i) for this object.

8. The distribution device according to claim 7, **characterized in that** it comprises a module, called the rebalancing module (11), for carrying out operations consisting in exchanging infrequently accessed blocks located in less loaded storage devices (3, 4) with frequently accessed blocks located in highly loaded storage devices (3, 4).

Fig 1

EP 1 454 269 B1

## Fig 2

var plafond         var plancher

0    Variabilité
popularité

CF

0       CF plancher       CF plafond

## Fig 3